# EUROPÄISCHE PATENTSCHRIFT

(11) **EP 2 452 971 B1**
(45) Veröffentlichungstag und Bekanntmachung des Hinweises auf die Patenterteilung: **14.08.2013**
(21) Anmeldenummer: 10014542.4
(22) Anmeldetag: 12.11.2010
(51) Int. Cl.: C08K 5/10, C08L 21/00

(54) **Sauerstoffhaltige Verbindungen als Weichmacher für Kautschuk**
Compounds containing oxygen as softeners for rubber
Composés contenant de l'oxygène comme plastifiant pour caoutchouc

(43) Veröffentlichungstag der Anmeldung: 16.05.2012
(73) Patentinhaber: Tudapetrol Mineralölerzeugnisse Nils Hansen KG, 20457 Hamburg (DE); H&R Ölwerke Schindler GmbH, 21107 Hamburg (DE)
(72) Erfinder: Bergmann, Christina, Dr., 22535 Hamburg (DE); Trimbach, Jürgen, 21465 Reinbek (DE)
(74) Vertreter: Kossak, Sabine

(56) Entgegenhaltungen:
- EP-A1- 0 585 717
- WO-A1-03/095550
- US-A- 4 507 418

## Beschreibung

Gegenstand der Erfindung sind Kautschuke, die als Weichmacher sauerstoffhaltige Verbindungen aus nachwachsenden Rohstoffen enthalten, insbesondere AcrylnitrilButadien-Kautschuke sowie Chloropren-Kautschuke, und die Verwendung dieser die sauerstoffhaltigen Weichmacher enthaltenden Kautschuke.

Es gibt eine Vielzahl unterschiedlicher Kautschuke. Wichtige Gruppen sind dabei die NBR-Kautschuke (NBR: *engl.*, nitrile butadiene rubber = Acrylnitril-Butadien-Kautschuk) und die CR-Kautschuke (CR: *engl.*, chloroprene rubber = ChloroprenKautschuk), die im Bereich technischer Gummiwaren verwendet werden.

NBR-Kautschuke werden üblicherweise durch Polymerisation von etwa 15 bis 50 Mol-% Acrylnitril und entsprechend 85 bis 50 Mol-% 1,3-Butadien erhalten. NBR-Kautschuke weisen eine hervorragende Mineralöl- und Kraftstoffbeständigkeit auf. Die einzelnen Polymerketten sind über polare Nitrilseitenketten miteinander verknüpft, wodurch eine Barriere entsteht, die von unpolaren Flüssigkeiten nicht überwunden werden kann. Aufgrund der aus den Nitrilgruppen herrührenden Polarität laden sich NBR-Kautschuke kaum elektrostatisch auf. Es ergibt sich keine Funkenbildung, so dass NBR-Kautschuke insbesondere auch für Tankschläuche, Dichtungen in Tankwagen, aber auch für Dichtungen in ölgeschmierten Maschinen eingesetzt werden. Weitere Anwendungsmöglichkeiten sind Radial-Wellendichtringe, Dichtelemente für die Hydraulik oder Pneumatik und O-Ringe. Der thermische Anwendungsbereich von NBR-Kautschuken liegt im Bereich, je nach Mischung, von ca. -30 bis +100°C. Kurzzeitig können Waren aus NBR-Kautschuken auch etwas höheren Temperaturen ausgesetzt werden. NBR-Kautschuke zeigen eine Kälteflexibilität bis etwa -55°C.

CR-Kautschuke werden üblicherweise durch Emulsionspolymerisation von 2-Chlor-1,3-butadien bei etwa 20 bis 50°C erhalten. Sie weisen eine gute Abriebfestigkeit und Schlagfestigkeit auf. CR-Kautschuke zeigen eine gute Beständigkeit gegen Wachse, Fette und nichtaromatische Kohlenwasserstoffe, gegen chlorhaltige Lösemittel sind sie jedoch nicht beständig. Aufgrund des hohen Chlorgehaltes sind CR-Kautschuke schwer entflammbar und zeigen eine geringe Neigung zur Funkenbildung. Sie werden daher insbesondere für Kabelummantelungen verwendet. Weitere Anwendungsbereiche sind Schläuche, Dichtungen, Antriebsriemen, Transportbänder oder in geschäumter Form als Material für Taucheranzüge.

Üblicherweise werden bei der Herstellung und Verarbeitung von Kautschuken, sowohl Naturkautschuken als auch synthetischen Kautschuken, Weichmacher als Additive zugesetzt, um die Verarbeitbarkeit des Kautschuks zu beeinflussen, aber auch um die späteren Eigenschaften des makromolekularen Werkstoffes gezielt einzustellen. Weichmacher beeinflussen wichtige mechanische Eigenschaften wie die Dehnbarkeit, die Weichheit, die Flexibilität und Elastizität des Kautschuks bzw. Gummis. Neben der "weichmachenden Wirkung" werden an einen Weichmacher insbesondere die Anforderungen gestellt, dass dieser sich homogen in der Kautschukmasse verteilen lässt, um gleichbleibende Produkteigenschaften zu gewährleisten, und dass der Weichmacher eine möglichst niedrige Toxizität und Umweltschädlichkeit aufweist.

Aus dem europäischen Patent EP 1 379 586 B1 ist die Verwendung von pflanzlichen Ölen, die mindestens einen Glyceroltriester von Ölsäure enthalten, als Weichmacher für Kautschukmischungen mit mindestens einem Dienelastomer bekannt. Ein solches Öl ist beispielsweise Sonnenblumenöl, welches die Ölsäure vorzugsweise in einem Massenanteil von mindestens 70% enthält.

Die bisher am häufigsten verwendeten Weichmacher sind wohl die Phthalate, insbesondere DEHP (Di-(2-ethylhexyl)-phthalat) und DBP (Dibutylphthalat). Diese gehen mit den Kunststoffen keine chemische Bindung ein und können daher im Laufe der Zeit wieder entweichen. Dieses ist jedoch im Hinblick auf ökologische und toxische Risiken äußerst bedenklich, da diese Phthalate als hochtoxisch eingestuft worden sind.

Es wurde daher die Richtlinie 2005/84/EG vom 14. Dezember 2005 erlassen, in welcher die sechs Phthalate DEHP, DBP, BBP (Benzylbutylphthalat), DINP (Di-,isononyl'phthalat), DIDP (Di-,isodecyl'phthalat) und DNOP (Di-n-octylphthalat) als gefährliche Stoffe gelistet sind. Diese Richtlinie gibt unter anderem vor, dass Spielzeug und Babyartikel, die mehr als 0,1 Gew.-% DEHP, DBP oder BBP enthalten, nicht mehr in den Verkehr gebracht werden dürfen.

Aufgabe der Erfindung ist es daher, für Kautschuke, insbesondere für NBR- und CR-Kautschuke, geeignete Weichmacher bereitzustellen, welche möglichst toxikologisch unbedenklich sind, dabei aber mindestens in ihren Eigenschaften als Weichmacher mit den herkömmlich eingesetzten Phthalaten vergleichbar sind. Aufgabe war es somit, Kautschuke bereitzustellen, die toxikologisch unbedenkliche Weichmacher enthalten, wobei jedoch die mechanischen Eigenschaften dieser Kautschuke vergleichbar oder besser sein sollten als bei Kautschuken, die herkömmliche Weichmacher, insbesondere Phthalate, enthalten.

Die Aufgabe wird erfindungsgemäß gelöst durch die Verwendung einer sauerstoffhaltigen Verbindung als Weichmacher für Kautschuke für technische Gummiwaren, dadurch gekennzeichnet, dass die sauerstoffhaltige Verbindung a) ein Fettsäureester der allgemeinen Formel R¹-COOR² ist, wobei R¹ ein Alkylrest oder ein Alkenylrest mit 11 bis 21 Kohlenstoffatomen ist und R² ein Methyl-, Ethyl-, Isopropyl-, 2-Ethylhexyl-, Octylrest oder ein Pentaerythritylrest ist, b) Pentaerythritdioleat, c) Pentaerythrittetraoleat ist.

Weitere Ausführungsformen sind Gegenstand der Unteransprüche oder nachfolgend beschrieben.

Es hat sich überraschend gezeigt, dass Fettsäureester den herkömmlich als Weichmacher verwendeten Phthalaten vergleichbare und teilweise sogar überlegene Wirkungen auf Kautschuke aufweisen, wobei die Fettsäureester aber im Gegensatz zu vielen Phthalaten nach gegenwärtigen Erkenntnissen toxikologisch unbedenklich sind. Dabei hat sich gezeigt, dass sowohl die Ester gesättigter als auch ungesättigter Fettsäuren für Kautschuke, insbesondere für NBR- und CR-Kautschuke, als Weichmacher geeignet sind. Gesättigte Fettsäureester sind bekanntlich solche, bei denen die Kohlenwasserstoffketten keine Doppelbindungen aufweisen, die sich also formal von den Alkanen ableiten, während ungesättigte Fettsäureester eine oder mehrere Doppelbindungen aufweisen. Fettsäureester sind als Weichmacher besonders vorteilhaft, da sie nicht nur synthetisiert werden können, sondern als "nachwachsende Rohstoffe" aus der Natur erhältlich sind. Alle Pflanzenöle und tierischen Fette sind grundsätzlich zur Herstellung dieser Weichmacher geeignet. Typische Pflanzenöle, die als Quelle erfindungsgemäß verwendeter Weichmacher dienen, sind Rapsöl, Erucarapsöl, High oleic- Sonnenblumenöl (Ölsäuregehalt von 80 bis 92%), Palmöl, Leinöl, Kugeldistelöl und Sojaöl. Neben pflanzlichen Ölen können die erfindungsgemäß verwendeten Weichmacher aber beispielsweise auch aus Fischöl gewonnen werden.

Erfindungsgemäß als Weichmacher geeignete gesättigte Fettsäureester sind beispielsweise Palmitin- und Stearinsäureester, geeignete ungesättigte Fettsäureester insbesondere Ölsäure-, Linolsäure-, Linolensäure- und Erucasäureester sowie deren Gemische. Beispiele für derartige Weichmacher sind Methyloleat, Ethyloleat, 2-Ethylhexyloleat, Pentaerythritdioleat, Pentaerythrittetraoleat, 2-Ethylhexylstearat, 2-Ethylhexyllinolenat oder 2-Ethylhexyllinolat.

Dem Fachmann sind Verfahren bekannt, um aus den natürlichen Rohstoffen, aber auch synthetischen, erfindungsgemäß verwendete Weichmacher zu erhalten.

Ein solches Verfahren ist beispielsweise die basisch katalysierte Umesterung von Triglyceriden mit einwertigen Alkoholen. Die Umesterung von Triglyceriden mit verzweigten bzw. langkettigen Alkoholen erfordert einen 2-4-fachen Überschuss, bevorzugt einen 3-fachen Überschuss, der stöchiometrisch erforderlichen Alkoholmenge.

Die Gesamtmenge an erfindungsgemäßen sauerstoffhaltigem Weichmacher in dem Kautschuk beträgt vorzugsweise 1 bis 15 phr, besonders bevorzugt beträgt sie 1 bis 10 phr. Die Abkürzung "phr" steht für "parts per hundred parts rubber" ("Teile je Hundert Teile Kautschuk").

Die technischen Gummiwaren, für welche der Kautschuk verwendet wird, sind bevorzugt Schläuche, Kabelummantelungen, Dichtungen, Membranen, Schuhsohlen, Bodenbeläge, Dämpfungseinrichtungen.

Die Erfindung wird anhand der nachfolgenden Beispiele erläutert, ohne dass sie auf diese beschränkt sein soll.

### Beispiele:

Es wurden die nachfolgend aufgeführten Rohstoffe eingesetzt: Bei Perbunan® 3945 handelt es sich um ein kommerzielles Produkt der Lanxess Deutschland GmbH (Acrylnitril-Gehalt: 39 Gew.-%, Mooney-Viskosität (100°C (ML 1+4), ohne Behandlung): 45±5 MU) und bei Krynac® 3345F handelt es sich ebenfalls um ein kommerzielles Produkt der Lanxess Deutschland GmbH (Acrylnitril-Gehalt 33 Gew.-%, Mooney-Viskosität (100°C (ML 1+4), ohne Behandlung): 45±5 MU). Vulkanox MB2/MG (4- und 5-Methyl-2-mercapto-benzimidazol (MMBI)) und Vulkanox HS/LG (2,2,4-Trimethyl-1,2-dihydrochinolin, polymerisiert (TMQ)) sind ebenso kommerzielle Produkte der Firma Lanxess Deutschland GmbH. Bei "ZnO aktiv" handelt sich um ein kommerzielles Produkt der Grillo Zinkoxid GmbH. Bei der Stearinsäure handelt sich um ein kommerzielles Produkt der Firma Schill+Seilacher Struktol. Bei den dunklen Füllstoffen Borax® N660, N550, N772 und Thermal Black MT N 990 handelt es sich um kommerzielle Produkte der Evonik Degussa GmbH Advanced Fillers & Pigments. Rhenogran® MBTS-80 (2-Mercaptobenzothiazol), Rhenogran® TBzTD-70 (Tetrabenzylthiuramdisulfid) und Rhenogran® S-80 (Schwefel) sind kommerzielle Produkte der Firma Rhein Chemie. Bei Perkadox BC-40B-PD handelt es sich um ein kommerzielles Produkt der AkzoNobel.

Die Kautschukmischungen wurden, abgesehen von der Hinzumischung der Vernetzungs- und Beschleunigerbestandteile, in einem Laborinnenmischer von ThermoFischer (Typ HAAKE RheoDrive 7) bei einer Rotordrehzahl von 50 U/min, einem Füllgrad von 60% und einer Mischzeit von 10 Minuten hergestellt. Die Auswurftemperatur betrug ca. 100°C. Alle weiteren Bestandteile wurden in einer zweiten Mischstufe mittels einer Laborwalze von Servitec (Walzenbreite 450 mm, Walzenabstand 50 mm) mit einer Friktion von 1:1,25 homogenisiert. Die Mischungen wurden in einer Hydrauliklaborpresse von Servitec, Typ Polystat 300 S, bei 200 bar vulkanisiert.

Tabelle 1 zeigt die verwendeten Rezepturen und Mischungsbestandteile der Mischungsserie 1, Mischungen auf Basis von NBR-Kautschuk für Diesel-Kraftstoffpumpen-Membranen. Die Kautschuk-Mischungen 1 bis 3 enthalten herkömmliche Phthalat-Weichmacher und dienen zum Vergleich. Es wurden außerdem NBR-Kautschukmischungen mit Ölsäuremethylester (Mischungen 4 und 5), Ölsäureethylester (Mischungen 6 und 7), Ölsäure-2-ethylhexylester (Mischungen 8 und 9), Pentaerythritdioleat (Mischung 10), Pentaerythrittetraoleat (Mischung 11) und Linolsäure-2-ethylhexylester (Mischung 12) hergestellt.

**Tabelle 1: Rezepturen der Mischungsserie 1**

| Versuch | 1 | 2 | 3 | 4 | 5 | 6 |
|---|---|---|---|---|---|---|
| Rezeptur | Menge [phr] | | | | | |
| Perbunan® 3945 | 100,0 | 100,0 | 100,0 | 100,0 | 100,0 | 100,0 |
| ZnO aktiv | 5,0 | 5,0 | 5,0 | 5,0 | 5,0 | 5,0 |
| Stearinsäure | 1,0 | 1,0 | 1,0 | 1,0 | 1,0 | 1,0 |
| Corax® N660 | 65,0 | 65,0 | 65,0 | 65,0 | 65,0 | 65,0 |
| MT N990 | 15,0 | 15,0 | 15,0 | 15,0 | 15,0 | 15,0 |
| Rhenogran® MBTS-80 | 3,1 | 3,1 | 3,1 | 3,1 | 3,1 | 3,1 |
| Rhenogran® TBzTD-70 | 2,1 | 2,1 | 2,1 | 2,1 | 2,1 | 2,1 |
| Rhenogran® S-80 | 0,5 | 0,5 | 0,5 | 0,5 | 0,5 | 0,5 |
| Dibutylphthalat | 3,0 | | | | | |
| Di-isononylphthalat | | 3,0 | 4,8 | | | |
| Ölsäuremethylester | | | | 3,0 | 3,8 | |
| Ölsäureethylester | | | | | | 3,0 |
| Ölsäure-2-ethylhexylester | | | | | | |
| Pentaerythritdioleat | | | | | | |
| Pentaerythrittetraoleat | | | | | | |
| Linolsäure-2-ethylhexylester | | | | | | |

**Tabelle 1a: Fortsetzung Tabelle 1**

| Versuch | 7 | 8 | 9 | 10 | 11 | 12 |
|---|---|---|---|---|---|---|
| Rezeptur | Menge [phr] | | | | | |
| Perbunan® 3945 | 100,0 | 100,0 | 100,0 | 100,0 | 100,0 | 100,0 |
| ZnO aktiv | 5,0 | 5,0 | 5,0 | 5,0 | 5,0 | 5,0 |
| Stearinsäure | 1,0 | 1,0 | 1,0 | 1,0 | 1,0 | 1,0 |
| Corax® N660 | 65,0 | 65,0 | 65,0 | 65,0 | 65,0 | 65,0 |
| MT N990 | 15,0 | 15,0 | 15,0 | 15,0 | 15,0 | 15,0 |
| Rhenogran® MBTS-80 | 3,1 | 3,1 | 3,1 | 3,1 | 3,1 | 3,1 |
| Rhenogran® TBzTD-70 | 2,1 | 2,1 | 2,1 | 2,1 | 2,1 | 2,1 |
| Rhenogran® S-80 | 0,5 | 0,5 | 0,5 | 0,5 | 0,5 | 0,5 |
| Dibutylphthalat | | | | | | |
| Di-isononylphthalat | | | | | | |
| Ölsäuremethylester | | | | | | |
| Ölsäureethylester | 3,9 | | | | | |
| Ölsäure-2-ethylhexylester | | 3,0 | 5,0 | | | |
| Pentaerythritdioleat | | | | 3,0 | | |
| Pentaerythrittetraoleat | | | | | 3,0 | |
| Linolsäure-2-ethylhexylester | | | | | | 3,0 |

Um mehr Informationen über das Verhalten dieser Weichmacher zu erhalten, wurde der Einfluss verschiedener Konzentrationen an Weichmacher untersucht.

Die Bestimmung der Mooney Scorch-Werte erfolgte bei 120°C nach DIN 53523, Teil 4. Die Bestimmung der Mooney-Viskositäten erfolgte bei 100°C nach DIN 53523, Teil 3. Die Bestimmung des Vulkanisationsverhaltens erfolgte bei 170°C nach DIN 53529. Die Bestimmung der Härte Shore A erfolgte nach DIN 53505. Die Bestimmung der Rückprallelastizität erfolgte nach DIN 53512. Die Bestimmung des Zug-Dehnungs-Verhaltens (Zugdehnung, Reißfestigkeit und Modul bei 100% Dehnung) erfolgte nach DIN 53504. Die Bestimmung des Quellgrades erfolgte nach DIN ISO 1817. Die Bestimmung des Druckverformungsrests erfolgte nach DIN 815.

Tabelle 2 zeigt die Ergebnisse der Mischungsprüfung und der Vulkanisatprüfung, einschließlich der physikalische Charakterisierung der Mischungen auf Basis von NBR-Kautschuk für Diesel-Kraftstoffpumpen-Membranen aus Tabelle 1.

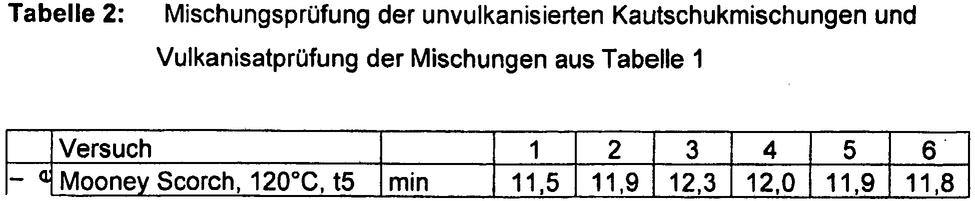

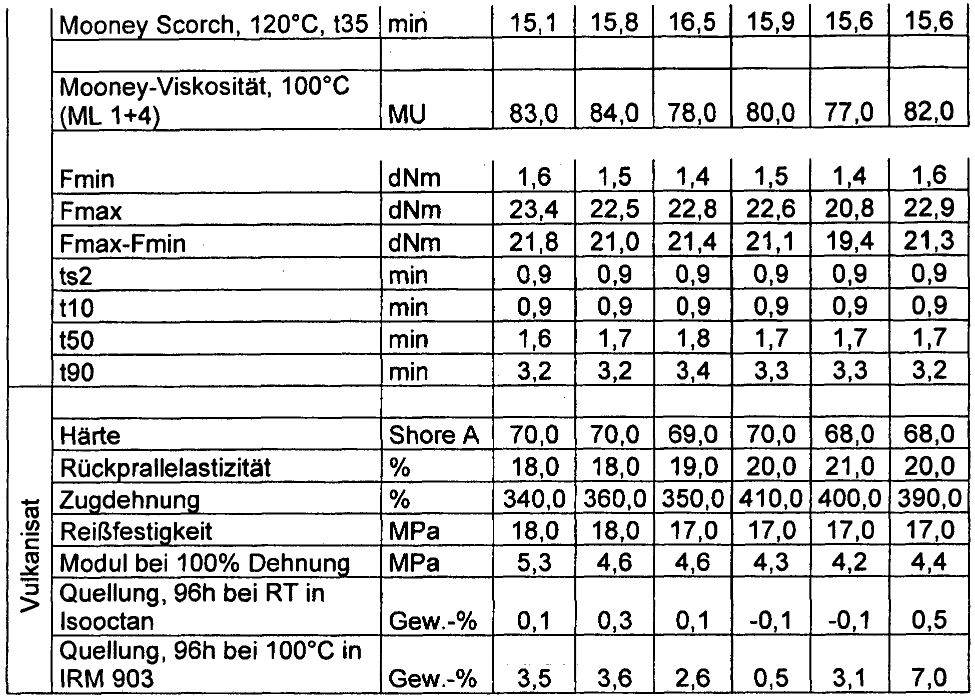

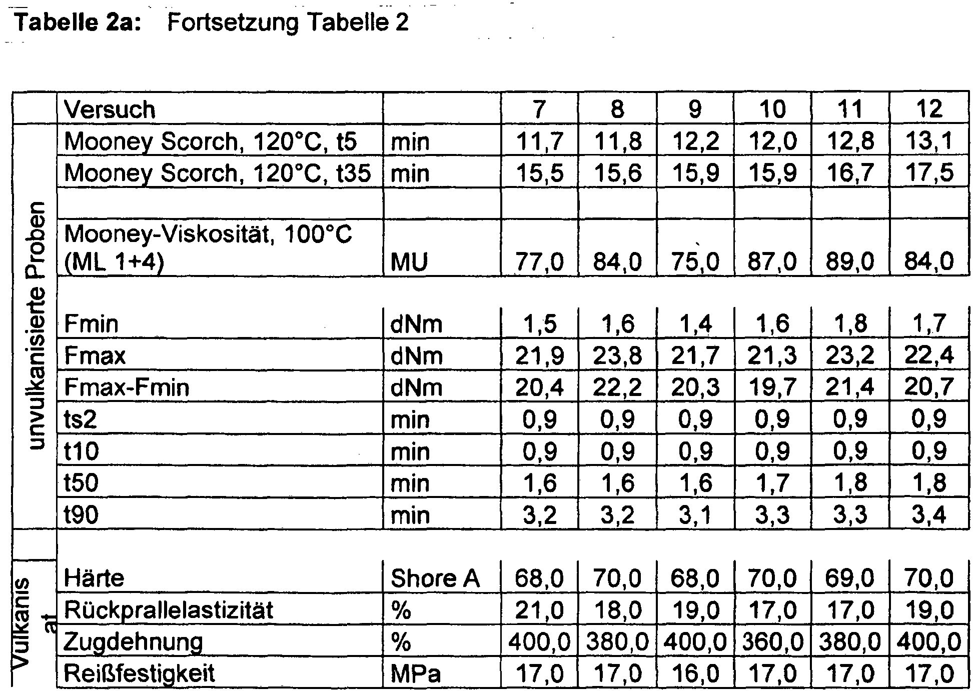

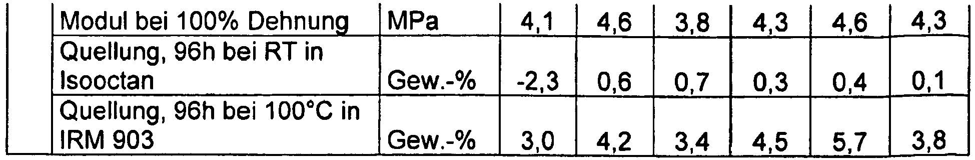

Aus den Ergebnissen in Tabelle 2 ist zu ersehen, dass die Mischungen 4 bis 12, die erfindungsgemäß sind, vergleichbare oder bessere Ergebnisse zeigen als die Mischungen 1 bis 3. Die ausgewählten zu Phthalaten alternativen Weichmacher heben den Mooney Scorch leicht an, was ein wichtiger, praktischer Nutzen für einige Anwendungen der Mischungen ist.

Aus den Mooney-Viskositätswerten ist zu erkennen, dass die Verarbeitbarkeit aller Kautschukmischungen vergleichbar gut ist.

Der Vulkanisationsprozess der Kautschukmischungen liefert nützliche Informationen. Die Mischungen, die Fettsäureester pflanzlicher Öle enthielten, führten zu vergleichbaren Vernetzungszeiten wie für die Referenz (t90-t10), d.h. für die Mischungen, enthaltend Phthalate als Weichmacher, was eine Möglichkeit bietet, die Kosten in der Produktion von Kautschukartikeln zu reduzieren.

Die Härte der Kautschukmischungen 4 bis 12 ist vergleichbar der Härte der Mischungen, die als Weichmacher üblicherweise verwendete Phthalate enthalten. Es ergibt sich für die erfindungsgemäß verwendeten Weichmacher zudem eine leichte Erhöhung der Rückprallelastizität der Kautschukmischungen.

Besonders wünschenswert ist der Erhalt des Zug-Dehnungs-Verhaltens, wie es sich bei herkömmlich verwendeten Phthalaten ergibt. Es wurden vergleichbare Werte erfindungsgemäßer Kautschukmischungen mit den Referenzproben, die Phthalate als Weichmacher enthielten, beobachtet. Darüber hinaus zeigen die Werte nach künstlicher Alterung in verschiedenen Medien keine Nachteile gegenüber den Vergleichsbeispielen. Höhere Quellgrade nach Alterung in der Referenzflüssigkeit IRM 903 wurden für die Kautschukmischungen 6 und 11 festgestellt.

Tabelle 3 zeigt die verwendeten Rezepturen und Mischungsbestandteile der Mischungsserie 2, Mischungen auf Basis von NBR-Kautschuk für O-Ringe. Die Kautschuk-Mischungen 13 und 14 enthalten herkömmliche Phthalat-Weichmacher und dienen zum Vergleich. Die Mischungen 15 bis 20 enthalten verschiedene Weichmacher, die erfindungsgemäß als Ersatz für Phthalat-Weichmacher verwendbar sind.

**Tabelle 3: Rezepturen der Mischungsserie 2**

| Versuch | 13 | 14 | 15 | 16 |
|---|---|---|---|---|
| Rezeptur | Menge [phr] | | | |
| Krynac® 3345F | 100,0 | 100,0 | 100,0 | 100,0 |
| ZnO aktiv | 3,0 | 3,0 | 3,0 | 3,0 |
| Corax® N550 | 30,0 | 30,0 | 30,0 | 30,0 |
| Corax® N772 | 45,0 | 45,0 | 45,0 | 45,0 |
| Vulkanox® MB2/MG | 2,0 | 2,0 | 2,0 | 2,0 |
| Vulkanox® HS/LG | 2,0 | 2,0 | 2,0 | 2,0 |
| Perkadox® BC-40B-PD | 4,9 | 4,9 | 4,9 | 4,9 |
| Dibutylphthalat | 9,0 | | | |
| Di-isononylphthalat | | 9,0 | | |
| Ölsäuremethylester | | | 9,0 | 7,7 |
| Ölsäureethylester | | | | |
| Ölsäure-2-ethylhexylester | | | | |
| Linolensäure-2-ethylhexylester | | | | |
| Linolsäure-2-ethylhexylester | | | | |

**Tabelle 3a: Fortsetzung Tabelle 3**

| Versuch | 17 | 18 | 19 | 20 |
|---|---|---|---|---|
| Rezeptur | Menge [phr] | | | |
| Krynac® 3345F | 100,0 | 100,0 | 100,0 | 100,0 |
| ZnO aktiv | 3,0 | 3,0 | 3,0 | 3,0 |
| Corax® N550 | 30,0 | 30,0 | 30,0 | 30,0 |
| Corax® N772 | 45,0 | 45,0 | 45,0 | 45,0 |
| Vulkanox® MB2/MG | 2,0 | 2,0 | 2,0 | 2,0 |
| Vulkanox® HS/LG | 2,0 | 2,0 | 2,0 | 2,0 |
| Perkadox® BC-40B-PD | 4,9 | 4,9 | 4,9 | 4,9 |
| Dibutylphthalat | | | | |
| Di-isononylphthalat | | | | |
| Ölsäuremethylester | | | | |
| Ölsäureethylester | 9,0 | | | |
| Ölsäure-2-ethylhexylester | | 9,0 | | |
| Linolensäure-2-ethylhexylester | | | 9,0 | |
| Linolsäure-2-ethylhexylester | | | | 9,0 |

Tabelle 4 zeigt die Ergebnisse der Mischungsprüfung, der Vulkanisatprüfung und die physikalische Charakterisierung von Mischungen auf Basis von NBR-Kautschuk für O-Ringe aus Tabelle 3.

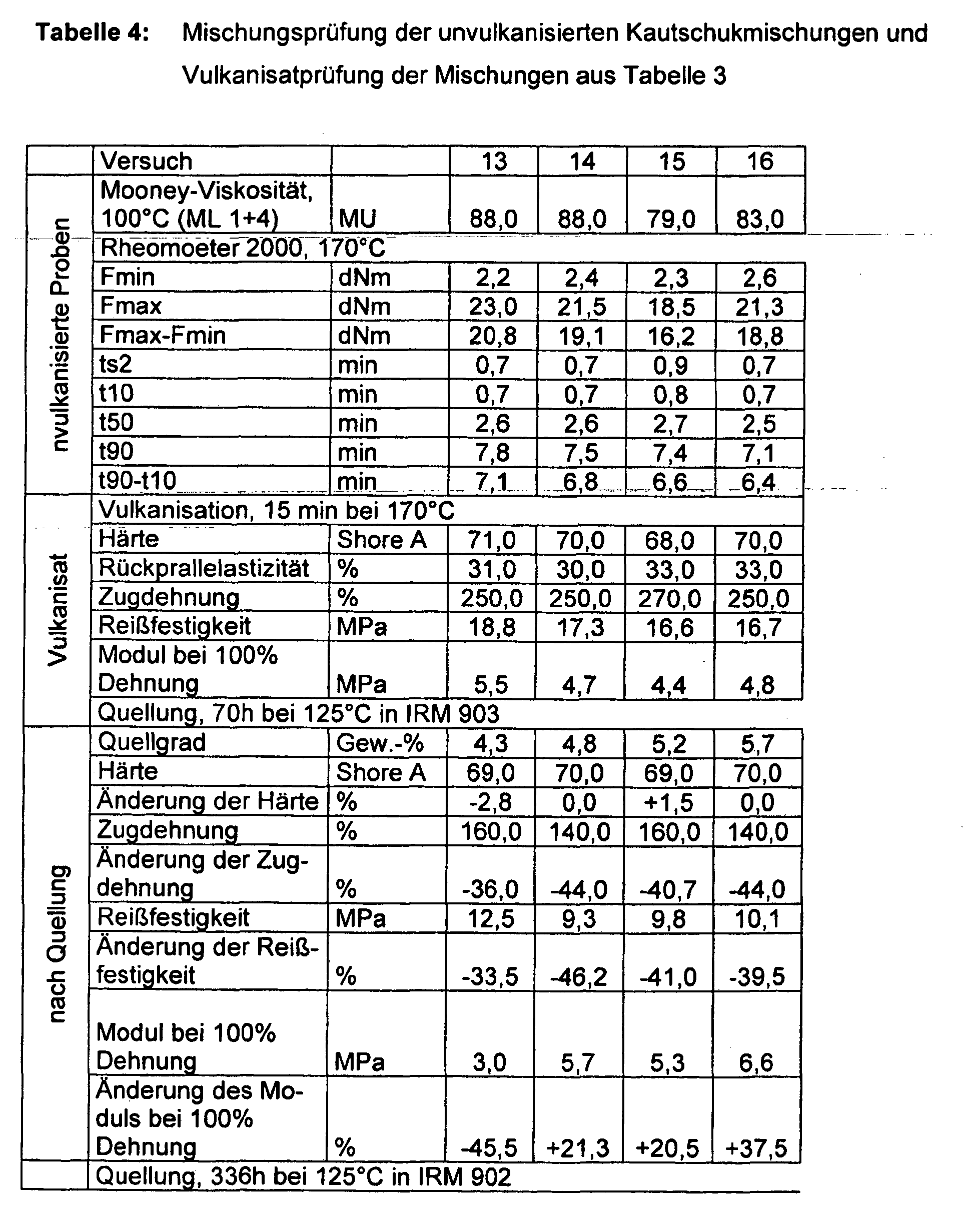

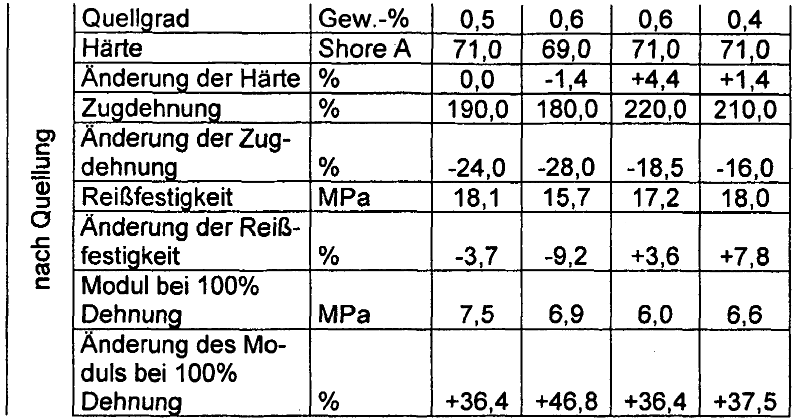

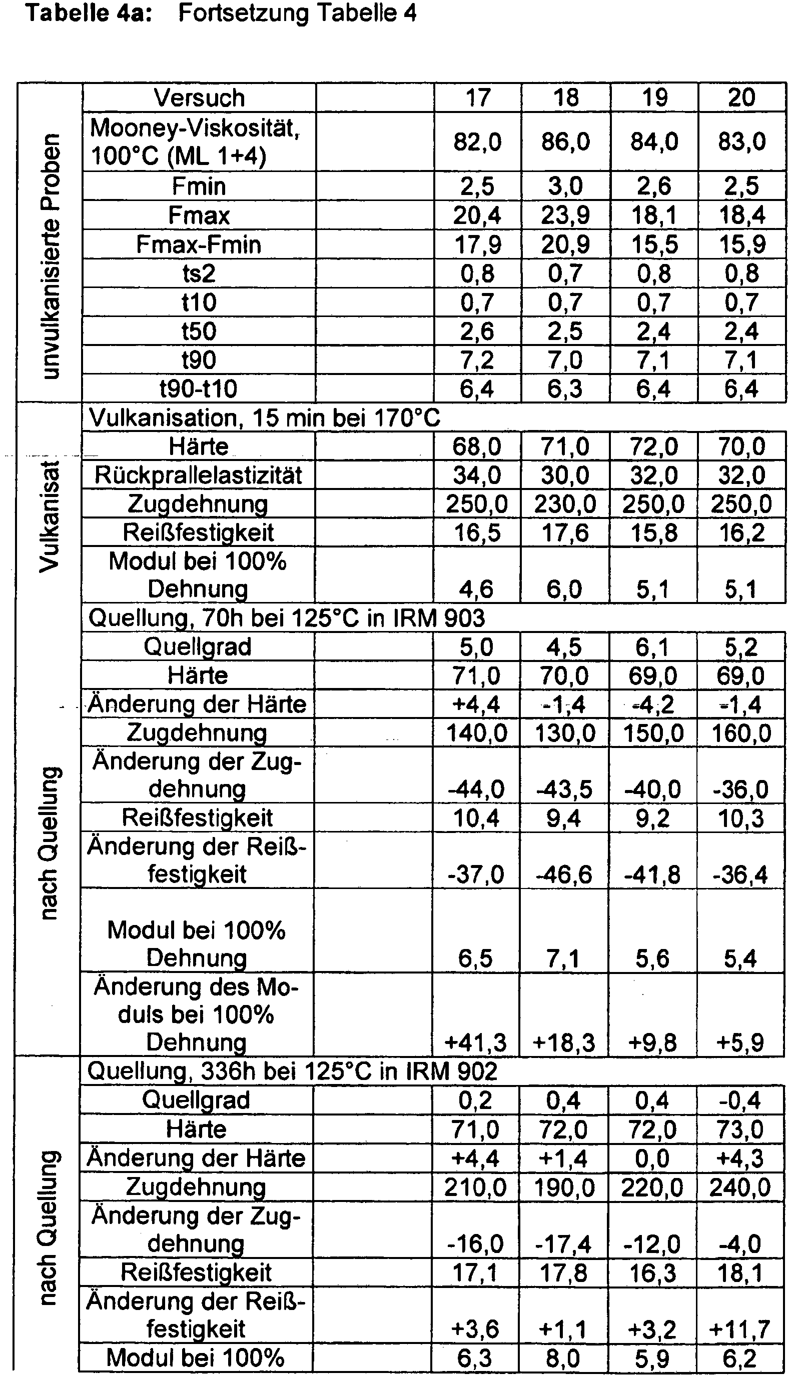

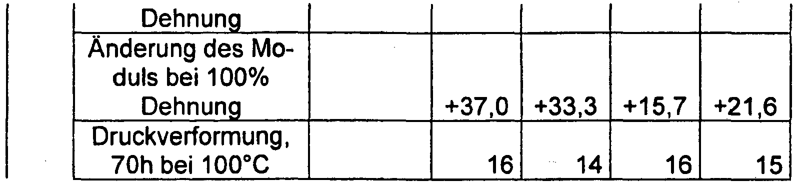

Die Mooney-Viskosität gibt Hinweise auf das Fließverhalten bei Verarbeitungsbedingungen. Alle erfindungsgemäß eingesetzten Weichmacher (vgl. Mischungen 15 bis 20) setzen die Mooney-Viskosität herab.

Untersuchungen im Rheometer geben Informationen über das Vulkanisationsverhalten. Die Ts2-Zeiten (Anstieg des Vernetzungsgrades um 2 Einheiten) aller Weichmacher-haltigen Mischungen sind vergleichbar mit den Referenzmischungen. Außerdem zeigen die Mischungen 15 bis 20 schnellere Vernetzungszeiten (t90-t10) im Vergleich zu den Referenzmischungen, was eine Kostenreduzierung in der Produktion von Kautschukartikeln möglich macht.

Die vulkanisierten Kautschukzusammensetzungen wurden vor und nach Alterung in zwei Referenzflüssigkeiten, IRM 903 (70h bei 125°C) und IRM 902 (336h bei 125°C), getestet. Von allen eingesetzten Weichmachern zeigt sich Linolsäure-2-ethylhexylester (Mischung 20) als bester Ersatz für Phthalate.

Die Linolsäure-2-ethylhexylester-haltige vulkanisierte Kautschukmischung 20 weist nach Alterung über 70h bei 125°C in der Referenzflüssigkeit IRM 903 dasselbe Verhältnis der Änderungen in Härte, Zugdehnung und Reißfestigkeit wie die DBP-haltige Mischung (Mischung 13) und ein besseres Verhältnis als die DINP-haltige Mischung (Mischung 14) auf. Das Modul bei 100% Dehnung der Linolsäure-2-ethylhexylester-haltigen Mischung 20 erhöht sich nach Alterung leicht (von 5,1 MPa auf 5,4 MPa), während das Modul der DBP-haltigen Mischung 13 von 5,5 MPa auf 3,0 MPa sinkt.

Nach Alterung über 336h bei 125°C in der Referenzflüssigkeit IRM 902 weist die Mischung mit Linolsäure-2-ethylhexylester (Mischung 20) ein deutlich besseres Verhalten als die Mischungen mit DBP und DINP auf. Die Zugdehnung der Linolsäure-2-ethylhexylester-haltigen Mischung 20 sinkt um 4%, während die Zugdehnung der DBP-haltigen Mischung 13 um 24% und die für die DINP-haltige Mischung 14 um 28% sinkt. Die Reißfestigkeit für die Linolsäure-2-ethylhexylester-haltige Mischung 20 steigt um 11,7%, während die Reißfestigkeiten für die beiden Phthalat-haltigen Mischungen, d.h. die mit DBP und DINP, um 3,7% bzw. 9,2% sinken. Die Ergebnisse zeigen auch, dass die Mischung mit Linolsäure-2-ethylhexylester (Mischung 20) eine geringere Erhöhung des Moduls bei 100% Dehnung hat als die beiden Mischungen mit Phthalaten.

## Patentansprüche

1. Verwendung einer sauerstoffhaltigen Verbindung als Weichmacher für Kautschuke für technische Gummiwaren, **dadurch gekennzeichnet, dass** die sauerstoffhaltige Verbindung
a) ein Fettsäureester der allgemeinen Formel R¹-COOR² ist, wobei R¹ ein Alkylrest oder ein Alkenylrest mit 11 bis 21 Kohlenstoffatomen ist und R² ein Methyl-, Ethyl-, Isopropyl-, 2-Ethylhexyl-, Octylrest oder ein Pentaerythritylrest ist,
b) Pentaerythritdioleat oder
c) Pentaerythrittetraoleat
ist.

2. Verwendung gemäß Anspruch 1, **dadurch gekennzeichnet, dass** der Kautschuk aus der Gruppe der Nitril-Kautschuke und der Chloropren-Kautschuke ist.

3. Verwendung gemäß Anspruch 1 oder 2, **dadurch gekennzeichnet, dass** der Fettsäureester aus der Gruppe der Palmitinsäureester, Stearinsäureester, der Ölsäureester, Linolsäureester, Linolensäureester und Erucasäureester sowie deren Gemischen ausgewählt ist.

4. Verwendung gemäß einem der vorhergehenden Ansprüche, **dadurch gekennzeichnet, dass** der Fettsäureester Methyloleat, Ethyloleat, 2-Ethylhexyloleat, 2-Ethylhexylstearat, 2-Ethylhexyllinolenat oder 2-Ethylhexyllinolat ist.

5. Verwendung gemäß einem der vorhergehenden Ansprüche, **dadurch gekennzeichnet, dass** die Gesamtmenge an sauerstoffhaltigem Weichmacher 1 bis 15 phr, bevorzugt 1 bis 10 phr beträgt.

6. Verwendung gemäß einem der vorhergehenden Ansprüche, wobei die technischen Gummiwaren Schläuche, Kabelummantelungen, Dichtungen, Membranen, Schuhsohlen, Bodenbeläge oder Dämpfungseinrichtungen sind.

## Claims

1. Use of an oxygen-containing compound as plasticiser for rubber intended for technical rubber products, **characterised in that** the oxygen-containing compound is
a) a fatty acid ester with the general formula R¹-COOR², where R¹ is an alkyl radical or an alkenyl radical with 11 to 21 carbon atoms, and where R² is a methyl, ethyl, isopropyl, 2-ethoxy or octyl radical or a pentaerythrityl radical,
b) pentaerythrityl dioleate
c) pentaerythrityl tetraoleate.

2. Use in accordance with Claim 1, **characterised in that** the rubber is from the group of nitrile rubbers or chloroprene rubbers.

3. Use in accordance with Claim 1 or 2, **characterised in that** the fatty acid ester is selected from the group of palmitic esters, stearic esters, oleic esters, linoleic esters, linolenic esters, erucic esters and mixtures of these.

4. Use in accordance with one of the preceding claims, **characterised in that** the fatty acid ester is methyl oleate, ethyl oleate, 2-ethylhexyl oleate, 2-ethylhexyl stearate, 2-ethylhexyl linolenate or 2-ethylhexyl linolate.

5. Use in accordance with one of the preceding claims, **characterised in that** the total quantity of oxygen-containing plasticiser is 1 to 15 parts per 100, preferably 1 to 10 parts per hundred.

6. Use in accordance with one of the preceding claims, where the technical rubber goods are hoses, cable sheaths, seals, membranes, soles for shoes, floor coverings and damping devices.

## Revendications

1. Utilisation d'un composé oxygéné en tant que plastifiant pour caoutchoucs dans des articles techniques en caoutchouc, **caractérisée en ce que** le composé oxygéné est :
a) un ester d'acide gras de formule générale R¹-COOR² dans laquelle R¹ représente un groupe alkyle ou alcényle comportant de 11 à 21 atomes de carbone et R² représente un groupe méthyle, éthyle, iso-propyle, 2-éthyl-hexyle ou octyle, ou un reste de pentaérythritol,
b) du dioléate de pentaérythritol,
c) ou du tétraoléate de pentaérythritol.

2. Utilisation conforme à la revendication 1, **caractérisée en ce que** le caoutchouc est choisi dans l'ensemble formé par les caoutchoucs nitrile et les caoutchoucs de chloroprène.

3. Utilisation conforme à la revendication 1 ou 2, **caractérisée en ce que** l'ester d'acide gras est choisi dans l'ensemble formé par les esters de l'acide palmitique, les esters de l'acide stéarique, les esters de l'acide oléique, les esters de l'acide linoléique, les esters de l'acide linolénique, et les esters de l'acide érucique, ainsi que les mélanges de ces esters.

4. Utilisation conforme à l'une des revendications précédentes, **caractérisée en ce que** l'ester d'acide gras est de l'oléate de méthyle, de l'oléate d'éthyle, de l'oléate de 2-éthyl-hexyle, du stéarate de 2-éthyl-hexyle, du linolénate de 2-éthyl-hexyle, ou du linoléate de 2-éthyl-hexyle.

5. Utilisation conforme à l'une des revendications précédentes, **caractérisée en ce que** la quantité totale de plastifiant oxygéné vaut de 1 à 15 pcc, et de préférence de 1 à 10 pcc.

6. Utilisation conforme à l'une des revendications précédentes, pour laquelle les articles techniques en caoutchouc sont des tuyaux, des gaines de câbles, des joints d'étanchéité, des membranes, des semelles de chaussures, des revêtements de sol, ou des amortisseurs.
